## Europäisches Patentamt
## European Patent Office
## Office européen des brevets

(19)

(11) Veröffentlichungsnummer : **0 019 216**
**B1**

(12)

# EUROPÄISCHE PATENTSCHRIFT

(45) Veröffentlichungstag der Patentschrift :
23.12.81

(51) Int. Cl.³ : **C 02 F  1/54, C 02 F 11/00**

(21) Anmeldenummer : 80102523.0

(22) Anmeldetag : 08.05.80

(54) Verfahren zur verbesserten Aufarbeitung von Abwasser.

(30) Priorität : 21.05.79 DE 2920526

(43) Veröffentlichungstag der Anmeldung :
26.11.80 (Patentblatt 80/24)

(45) Bekanntmachung des Hinweises auf die Patenterteilung : 23.12.81 Patentblatt 81/51

(84) Benannte Vertragsstaaten :
BE DE FR GB IT NL

(56) Entgegenhaltungen :
FR - A - 2 236 010
GB - A - 411 702

(73) Patentinhaber : **BAYER AG**
**Zentralbereich Patente, Marken und Lizenzen**
**D-5090 Leverkusen 1, Bayerwerk (DE)**

(72) Erfinder : **Reischl, Artur, Dr.**
**von Böttinger-Strasse 19**
**D-5090 Leverkusen (DE)**
Erfinder : **Mack, Kurt, Dr.**
**Claudiusweg 15**
**D-5600 Wuppertal (DE)**
Erfinder : **Sahlmen, Friedhelm, Ing.-grad.**
**Asberger-Strasse 157**
**D-4130 Moers (DE)**

Imprimerie Jouve, 17, rue du Louvre, 75001 Paris, France

EP 0 019 216 B1

## Verfahren zur verbesserten Aufarbeitung von Abwasser

Die vorliegende Erfindung betrifft ein Verfahren zur Reinigung von Abwässern durch welches Abtrennung, Aufarbeitung und Entsorgung der in mechanisch und/oder vollbiologisch arbeitenden Kläranlagen anfallenden Schlämme verbessert werden.

In biologisch arbeitenden Kläranlagen wird die biochemische Abwasserreinigung mit Hilfe von Mikroorganismen durchgeführt, wobei die organischen Bestandteile des Abwassers auf biologischem Weg eliminiert werden. Unter den dabei angewandten Bedingungen erfolgt eine besonders starke mikrobielle Vermehrung unter Assimilation der organischen Verunreinigungen durch die Mikroorganismen in den sogenannten Belebtschlammbecken der Kläranlagen. Ein Teil der hauptsächlich aus Bakterien bestehenden Biomassen muß daher kontinuierlich den Belebtschlammbecken als Überschußschlamm entnommen werden, um die optimalen Bedingungen der mikrobiellen Abwasserreinigung aufrecht zu erhalten. Deshalb fallen bei der vollbiologischen Reinigung industrieller und kommunaler Abwässer weltweit Biomassen in außerordentlich großen und stets steigenden Mengen an. Allein in der BRD werden z.Z. jährlich bereits ca. 2 Millionen Tonnen (berechnet als Trockengewicht) solcher proteinhaltiger Biomassen entweder in Deponien abgeladen oder verbrannt. Die dafür erforderliche Entfernung des Wassers aus den Belebtschlämmen ist auch heute noch problematisch, da unter den in den Kläranlagen in der Praxis üblichen Sedimentationsbedingungen in den Zwischen- und Nach-klärbecken der abzuführende Belebtschlamm nur etwa 1 Gew.-% an mikrobieller Trockenmasse enthält. Durch maschinelle oder statische Voreindickung läßt sich der Feststoffgehalt je nach Art der Schlämme nur auf 3 bis 9 Gew.-% konzentrieren und auch bei Zugabe von Polyelektrolyten durch Filtration oder Zentrifugieren in der Praxis lediglich auf 8 bis 15 Gew.-% steigern.

Die Belebtschlämme haben schon bei diesen niedrigen Konzentrationen wegen der starken chemischen und physikalischen Bindung des Wassers an die Mikroorganismen eine ausgeprägte Gelstruktur und verhältnismäßig hohe Viskosität. Deshalb ist eine übliche Filtration oder das Zentrifugieren ohne spezielle Behandlung unmöglich. Die Entfernung des Wassers wird auch dadurch erschwert, daß die Bakterienzellen einander anziehen und gemeinsame schleimige Hüllen ausbilden, wobei klebrige Flocken entstehen. Deshalb setzt man in der Praxis den Belebtüberschußschlämmen etwa die gleiche bis doppelte Menge an anorganischen Schlämmen, beispielsweise aus Kalk, Asbestflocken oder unlöslichen Metalloxiden zu, um die Entfernung des Wassers mit Hilfe von Filterpressen im technischen Maßstab zu erleichtern. So wird ein Preßkuchen mit einem Wassergehalt von etwa 50 Gew.-% gewonnen. Für die Verbrennung sollte jedoch der Überschußbelebtschlamm einen möglichst hohen Gehalt an organischer Masse aufweisen, da der Wasserentzug aus den in der Praxis anfallenden, auch bei Verwendung von kostspieligen organischen Polyelektrolyten als Fällungshilfsmittel relativ niedrig konzentrierten Schlämmen weit mehr Energie erfordert, als an Wärmeäquivalenten bei der Verbrennung gewonnen werden kann.

Auch bezüglich der Reinigungsleistung und der oft problematischen Aufarbeitung bedürfen die Absetzvorgänge von Belebtschlämmen in den Zwischen- und Nach-klärbecken einer Verbesserung, damit die behördlich geforderten Grenzwerte eingehalten werden können ; ferner müssen aus ökonomischen Gründen die Verfahren zur Wasserabtrennung unter Einsparung wenigstens eines Teiles der derzeit in großen Mengen angewandten Flockungsmittel optimiert werden und schließlich entweder die Verbrennung der überschüssigen Klärschlämme kostengünstiger ermöglicht oder, besonders erstrebenswert, neue ökologisch einwandfreie Verwertungsmöglichkeiten erschlossen werden, im Sinne eines großtechnischen Recycling der hauptsächlich aus hochwertigen Proteinen, Nukleinsäuren, Enzymen und anderen wertvollen organischen Verbindungen bestehenden Belebtschlämme.

Die erwähnte Aufgabenstellung wird durch das erfindungsgemäße Verfahren in hohem Maße erfüllt.

Überraschend wurde nämlich gefunden, daß mehrere Verfahrensstufen bei der Abwasserreinigung (z.B. in Kläranlagen) erheblich verbessert werden können, wenn die Aufarbeitung der Klärschlämme in Anwesenheit von sogenannten TDI-Rückstandsschlacken in Form eines zerkleinerten Pulvers oder einer wäßrigen Suspension durchgeführt wird, wie sie zwangsweise großtechnisch bei der destillativen Entfernung von monomeren Toluylendiisocyanaten aus den rohen Phosgenierungsprodukten von Toluylendiaminen, gegebenenfalls nach dem Einrühren des isocyanathaltigen teerartigen Destillationsrückstands in Wasser, zunächst als grobteilige, bisher nicht befriedigend verwertbare Schlacken anfallen. Das Verfahren eignet sich sowohl für vollbiologisch arbeitende industrielle und/oder kommunale Kläranlagen als auch zur Vorklärung industrieller Abwässer mit Feststoffgehalten < 5 Gew.-%, bevorzugt < 1 Gew.-%.

Gegenstand der vorliegenden Erfindung ist somit ein Verfahren zur verbesserten Abscheidung von organischen und/oder anorganischen wäßrigen Schlämmen bei der Reinigung von Abwässern in mechanischen und/oder biologischen Kläranlagen durch Zusatz von die Schlammabscheidung beschleunigenden Mitteln, welches dadurch gekennzeichnet ist, daß man als Abscheidungsmittel pulverförmige, in Wasser und organischen Lösungsmitteln unlösliche Destillationsrückstände mit einer mittleren Teilchengröße von weniger als 2 mm einsetzt, wie sie nach der destillativen Entfernung von monomeren Toluylendiisocyanaten aus dem rohen technischen Phosgenierungsprodukt von Toluylendiaminen, gegebenenfalls nach dem Einrühren in Wasser, als Schlacke anfallen und die gegebenenfalls durch Reaktion mit gegenüber den funktionellen Gruppen des Destillationsrückstands, insbesondere den Isocyanatgruppen, reaktiven Verbindungen chemisch modifiziert wurden.

Die im erfindungsgemäßen Verfahren einzusetzenden Destillationsrückstände fallen, wie erwähnt, zwangsweise bei den heute gängigen Produktionsverfahren von 2,4- und/oder 2,6-Toluylendiisocyanat (« TDI ») in großtechnischem Maßstab an. Es handelt sich dabei um höhermolekulare, über Hauptvalenzbindungen vernetzte teerartige Massen, die im allgemeinen in einer Menge von über 10 Gew.-%, bezogen auf die berechnete quantitative Ausbeute an monomeren Diisocyanaten, entstehen und die im Anschluß an den Destillationsvorgang zwecks besserer Handhabbarkeit meist über 130 °C, bevorzugt über 150 °C heiß in einem Rührkessel in Wasser eingetragen werden, wobei unter Reaktion eines großen Teils der freien Isocyanatgruppen zu Polyharnstoffgruppen (im folgenden « Denaturierung » des TDI-Rückstands genannt) eine grobteilige, unregelmäßig geformte, unlösliche Schlacke entsteht. Diese Schlacke hat zwar noch einen Gehalt an freien NCO-Gruppen (im allgemeinen unter 15 Gew.-%, meist 1 bis 10 Gew.-%), jedoch ist sie praktisch frei an monomeren Diisocyanaten. Neben den restlichen NCO-Gruppen weisen die TDI-Rückstandsschlacken in je nach Denaturierungsverfahren unterschiedlichen Mengenverhältnissen Harnstoff-, Biuret-, Uretdion-, Isocyanurat-, Carbodiimid-, Uretonimin- und gegebenenfalls auch Methylbenzimidazolongruppen sowie deren Biuretisierungsprodukte auf. Die Schlacken sind über diese verschiedenen funktionellen Gruppen so hoch vernetzt, daß sie selbst bei einer mittleren Teilchengröße von weniger als 5 µm, in inerten organischen Lösungsmitteln wie Methylenchlorid, Cyclohexan, Cyclohexanon, Toluol, Xylol oder Dichlorbenzol auch bei Siedetemperatur praktisch unlöslich sind. In siedendem Dimethylformamid werden die Rückstandspulver teilweise angequollen, lösen sich jedoch nicht. Beim Erhitzen erweicht, wenn überhaupt, nur ein sehr geringer Anteil der erfindungsgemäß einzusetzenden TDI-Destillationsrückstände oberhalb von ca. 250 °C ; jedoch tritt oberhalb von ca. 280 °C Zersetzung unter Gasentwicklung ein, ohne daß die Destillationsrückstände schmelzen.

Die gegebenenfalls mit Wasser benetzte oder beim Denaturierungsprozeß im Rührkessel in Wasser suspendierte, sehr grobkörnige TDI-Rückstandsschlacke wird zunächst vorzugsweise mit Hilfe einer Zerkleinerungsmaschine, beispielsweise mit einem Schneidegranulator oder einer Hammermühle, auf weniger als 3 mm vorzerkleinert und anschließend zu einem beliebigen Zeitpunkt nach bekannten Mahlverfahren entweder in der Naß- oder Trockenphase auf eine für die vorgesehene Verwendung erforderliche Endfeinheit gebracht.

Wenn die TDI-Rückstände, beispielsweise beim großtechnisch praktizierten, oben beschriebenen Denaturierungsprozeß, in Wasser oder mit Wasser benetzt anfallen und eine teilweise chemische Reaktion des Rückstands mit den in Wasser suspendierten Klärschlämmen der Klärbecken nicht stört, bietet sich besonders ökonomisch und umweltfreundlich eine Naßzerkleinerung der TDI-Grobschlacke in einem Teil der meist ca. 0,3 bis 3 %igen wäßrigen Klärschlamm-Suspension des Klärbeckens in diskontinuierlich oder vorteilhafter kontinuierlich arbeitenden, gegebenenfalls zweistufig hintereinander geschalteten Maschinen an. Die Feststoffkonzentrationen dieser Mischungen liegen während der Naßmahlung vorzugsweise zwischen 10 und 45 Gew.-%. Neben Rohr- und Kugelmühlen kommen besonders vorteilhaft Zahnkolloid-, Trigonal-Zahnring-, Korundscheiben- und Rührwerkskugelmühlen in Frage, je nachdem, welche Korngröße angestrebt wird.

Die bei der Naßzerkleinerung erhaltenen, je nach Arbeitsweise noch unterschiedliche Mengen an freien NCO-Gruppen aufweisenden TDI-Rückstandsschlacken werden entweder als sehr feinteilige Suspensionen bzw. Pasten oder als Pulver in derselben Weise wie die durch Trockenzerkleinerung erhältlichen TDI-Rückstands-Pulver eingesetzt.

Für die Trockenmahlung wird unter 2 bis 3 mm vorzerkleinerte und bevorzugt bei Temperaturen unter 50 °C vorgetrocknete, nicht wesentlich über 15 Gew.-, bevorzugt unter 5 Gew.-%, Feuchtigkeit enthaltende TDI-Rückstandsschlacke eingesetzt. Bei der Wahl der Trockenzerkleinerungsmaschinen sind im wesentlichen nur die gewünschte Endfeinheit und Korngrößenverteilung, aber auch die Mahlkosten von vorrangiger Bedeutung. Die erfindungsgemäß eingesetzten Rückstandsschlacken sind im Vergleich zu Kunststoffen sehr hart und wegen ihres hohen Vernetzungsgrades in den üblichen Zerkleinerungsmaschinen ohne Kühlungsprobleme bei Temperaturen bis ca. 220 bis 300 °C mahlbar, ohne zu erweichen, was insbesondere zur Erzielung von sehr kleinen Korngrößen von besonderer Bedeutung ist.

Verwendung finden beispielsweise Stifts-, Kugel- oder Pralltellermühlen, ferner Luftstrommühlen wie Schlagkreuz, Zahnkranz- oder Turbomühlen, aber besonders bevorzugt Dampf- oder Luftstrahlmühlen, weil in diesen die Zerkleinerung hauptsächlich durch gegenseitige Teilchenstöße, weniger durch Wandstöße, stattfindet und schon in einem Durchsatz Feinstkorngrößen erzielt werden. Selbstverständlich sind auch bei der Trockenzerkleinerung sowohl ein- als auch mehrstufige diskontinuierliche oder kontinuierliche Mahlprozesse möglich.

Die TDI-Rückstandspulver können vor ihrer Verwendung im erfindungsgemäßen Verfahren den verschiedensten chemischen Modifizierungen unterworfen werden. Diese zum Teil bereits beim Mahlprozeß durchführbaren Modifizierungsreaktionen können sowohl in der Gasphase als auch in Gegenwart eines flüssigen Reaktionsmediums stattfinden. Hierbei werden insbesondere die in den TDI-Rückstandspulvern noch enthaltenen geringen Mengen an freien Isocyanatgruppen zur Reaktion gebracht. So kann man beispielsweise durch den feingemahlenen TDI-Destillationsrückstand Ammoniakgas oder gasförmige Amine — bevorzugt nach dem Gegenstromprinzip — leiten, wobei in exothermer Reaktion auch ohne mechanische Durchmischung innerhalb sehr kurzer Zeit (je nach Feinheit des Pulvers bis zu weniger als 1 Minute) NCO-Freiheit erreicht ist. Dabei entstehen im TDI-Destillationsrückstand zusätzliche Harnstoffgruppierungen, die besonders leicht Kondensationsreaktionen mit Carbonylverbindungen, insbesondere Formaldehyd, eingehen können, welche gegebenenfalls gleichzeitig oder im Anschluß an die Reaktionen mit Ammoniak bzw. Aminen durch das Pulver geleitet werden können. Anstelle von Formaldehyd-Ammoniak-Gemischen kann auch Urotropin unter hydrolysierenden Bedingungen zur Ausbildung von Methylenharnstoffbrücken eingesetzt werden. Geeignete verdampfbare Amine sind beispielsweise Äthylamin, Diäthylamin, Dimethylamin, Butylamin, Dibutylamin, Äthylendiamin und Propylendiamin ; als Carbonylverbindungen kommen neben Formaldehyd z.B. Acetaldehyd, Propionaldehyd, Butyraldehyd, Aceton oder Methyläthylketon in Frage.

Eine weitere Modifizierungsreaktion aus der Gasphase ist die Umsetzung mit Wasserdampf. Während die Reaktion der freien Isocyanatgruppen der feingepulverten Rückstandsschlacke mit Wasserdampf auch bei Verwendung von fein gemahlenen TDI-Destillationsrückständen unter 100 °C nur langsam abläuft, kann man eine quantitative Polyharnstoffbildung innerhalb kurzer Zeit erreichen, wenn man Reaktionstemperaturen deutlich oberhalb des Siedepunkts von Wasser, bevorzugt oberhalb 130 °C, anwendet. Bei ausreichend zerkleinerter TDI-Rückstandsschlacke genügt es jedoch, diese, mit Wasser benetzt, ohne weitere Durchmischung den erwähnten Temperaturen auszusetzen. In analoger Weise können selbstverständlich auch wäßriger Ammoniak, wäßrige Aminlösungen oder Alkohole und Carbonsäuren in gasförmigem Zustand für Modifizierungsreaktionen mit den freien NCO-Gruppen eingesetzt werden, beispielsweise Methanol, Äthanol, Propanol, Isopropanol, Butanol, Äthylenglykol, Ameisensäure oder Essigsäure. ·

Für die Modifizierung des TDI-Rückstandspulvers in Wasser oder einem organischen inerten Lösungsmittel als Reaktionsmedium sind vor allem unter dem Einfluß von Katalysatoren ablaufende Reaktionen der freien Isocyanatgruppen untereinander von Interesse. Beispiele hierfür sind die Bildung von Uretdiongruppen in Gegenwart von Dimerisierungskatalysatoren wie z.B. trisubstituierten Phosphinen oder die Bildung von Carbodiimidgruppen in Gegenwart von Phospholinoxid. Eine andere Modifizierungsmöglichkeit besteht darin, an die freien Isocyanatgruppen der pulverisierten TDI-Rückstandsschlacke schwach saure Verbindungen (z.B. Bisulfit oder andere Isocyanatabspalter) zu addieren, die später zu jedem gewünschten Zeitpunkt bei höheren Temperaturen unter Freisetzung der Isocyanatgruppen wieder abgespalten werden können. Selbstverständlich können aus flüssiger Phase auch die verschiedenartigsten Modifizierungsreaktionen mit Verbindungen erfolgen, welche insbesondere gegenüber den Isocyanatgruppen der Rückstandspulver reaktive Gruppen (insbesondere Hydroxyl-, Amino- und/oder Carboxylgruppen) aufweisen. Gegebenenfalls kann man durch derartige Modifizierungsreaktionen in das Rückstandspulver auch anionische und/oder kationische oder zur Salzbildung befähigte Gruppen einführen. Die meisten dieser Verbindungen reagieren nicht nur mit den freien NCO-Gruppen des Rückstands sondern addieren. sich auch an dessen Carbodiimidbindungen. Geeignete 1- und mehrwertige Alkohole, Amine und Carbonsäuren, welche gegebenenfalls noch weitere funktionelle Gruppen (beispielsweise ionische und/oder zur Salzbildung befähigte Gruppen) aufweisen können, sind beispielsweise in den DE-Offenlegungsschriften 2 550 796 und 2 550 797 als Reaktionspartner für Polyisocyanate bei der in situ-Herstellung von Polyisocyanat-Polyadditionsprodukten in Polyhydroxylverbindungen beschrieben. Für Modifizierungsreaktionen geeignete Amine werden auch in der DE-OS 2 714 289, geeignete Carbonsäuren in der DE-OS 2 714 293 (in Zusammenhang mit der Addition derartiger Verbindungen an Carbodiimidgruppen) beschrieben. Auch Phosphite können gemäß DE-OS 2 714 292 unter Ausbildung von Phosphonoformamidingruppen an die Carbodiimidbindungen des TDI-Rückstandspulvers addiert werden. Selbstverständlich können auch die schon oben beschriebenen Modifizierungsreaktionen mit Carbonylverbindungen in einem flüssigen Reaktionsmedium stattfinden. Geeignete Carbonylverbindungen werden beispielsweise in der DE-OS 2 639 254 beschrieben.

Als Reaktionsmedium können für die eben beschriebenen Modifizierungsreaktionen neben Wasser die bekannten organischen Lösungsmittel mit einem Siedepunkt bevorzugt unter 150 °C, besonders bevorzugt unter 130 °C, eingesetzt werden, die jedoch, wie oben ausgeführt wurde, für den pulverisierten TDI-Destillationsrückstand praktisch Nichtlöser sind, d.h. lediglich als Suspensionsmittel fungieren.

Beispielhaft seien Methylenchlorid, Aceton, Petroläther, Cyclohexanon, Äthylacetat, Tetrahydrofuran, Benzol, Toluol und Xylol genannt. Nach erfolgter Modifizierungsreaktion kann das flüssige Reaktionsmedium durch Filtration und anschließende Trocknung oder durch Destillation entfernt werden. In vielen Fällen genügen schon sehr geringe Mengen des flüssigen Reaktionsmediums (häufig unter 10 Gew.-%, bezogen auf Rückstandspulver), um eine Auflösung des Modifizierungsmittels bzw. dessen gleichmäßige Verteilung im TDI-Rückstandspulver zu gewährleisten. Bei Anwendung von Temperaturen, die über dem Siedepunkt des Lösungsmittels liegen, wird in einem Druckgefäß gearbeitet.

Die sehr fein zerkleinerten NCO-haltigen oder NCO-freien TDI-Rückstandsschlacken können auch — beispielsweise in chlorierten Kohlenwasserstoffen suspendiert — durch Umsetzung mit Schwefeltrioxid oder Chlorsulfonsäure mit anschließender Verseifung in hydrophile aromatische polysulfonsaure Derivate überführt werden, wobei die Sulfonsäuregruppen teilweise an die vorhandenen Carbodiimidgruppen Additionsreaktionen eingehen.

Mit Aminen, Ammoniak oder Alkali entstehen die entsprechenden arylsulfonsauren Salze. Wurden zuvor in das Rückstandspulver, mittels der oben beschriebenen Reaktionen, Verbindungen mit tertiärem Stickstoff eingeführt, dann können die sulfonsauren TDI-Rückstandspulver amphothere Systeme ausbilden, bei denen sich sowohl die positive als auch die negative Ladung im gleichen Molekül befindet. In vielen Fällen kann man auch getrennt hergestellte anionische und kationische TDI-Rückstandspulver in einem beliebigen Ionenäquivalentverhältnis mischen und als Fällungshilfsmittel einsetzen.

Es ist erfindungsgemäß auch möglich, die TDI-Rückstandspulver mit pulverförmiger polymerer Blausäure (sogenannten Azulminsäuren) modifiziert zu verwenden. Azulminsäuren weisen ebenfalls reaktive Gruppierungen (insbesondere Aminogruppen) auf, welche sowohl mit den additionsfähigen Gruppen des TDI-Rückstands (z.B. NCO- und Carbodiimidgruppen) als auch mit den bei der Rückstands-Aufarbeitung gegebenenfalls mitverwendeten Modifizierungsmitteln (z.B. Carbonylverbindungen) reagieren können. Verfahren zur Herstellung von Azulminsäuren sowie ihre Stabilisierung gegenüber Blausäureabspaltung werden z.B. in Houben-Weyl, Methoden der Organischen Chemie (1952), Band 8, Seite 261, in Angew. Chem. 72 (1960), Seite 379-384, den DE-Patentschriften 662 338 und 949 600 sowie den DE-Offenlegungsschriften 28 06 019 und 28 06 020 beschrieben.

Weitere Einzelheiten hinsichtlich der Herstellung der im erfindungsgemäßen Verfahren einzusetzenden TDI-Rückstandspulver sind DE-OS 28 46 815 zu entnehmen.

Durch den erfindungsgemäßen Zusatz von gegebenenfalls chemisch modifizierten TDI-Rückständen werden insbesondere die folgenden Verfahrensstufen und Entsorgungsmaßnahmen bei der Aufarbeitung von kommunalen und industriellen Abwässern erleichtert bzw. verbessert :

1) Die Absetzvorgänge von (Belebt-) schlämmen in den Zwischen- und Nachklärbecken ;

2) die Schlammentwässerung durch Filtration und/oder Zentrifugieren unter gleichzeitiger Einsparung von Flockungsmitteln ;

3 a) Die Verbrennung der gegebenenfalls noch größere Mengen Wasser enthaltenden Klärschlämme bei gleichzeitiger Nutzung der mitverwendeten TDI-Rückstände als Energieträger bzw.

3 b) die in einer Parallelanmeldung beanspruchte Verwertung der durch chemische Reaktionen irreversibel denaturierten Klärschlämme in der Kunststoffindustrie und/oder Landwirtschaft.

### 1) Absetzung der Schlämme

In den Belebungsbecken üblicher Kläranlagen befinden sich vorzugsweise etwa 5 g/l Belebtschlammtrockensubstanz, die in den Klärbecken durch Absetzen meistens nur auf kanpp die doppelte Menge, d.h. ca. 10 g/l, konzentriert werden kann, was außerordentlich großvolumige Zwischen- und Nachklärbecken erfordert.

Trägt man erfindungsgemäß in die Klärbecken (unter im übrigen in Kläranlagen üblichen Arbeitsbedingungen) etwa 10 bis 80 Gew.-%, bevorzugt 30 bis 60 Gew.-%, bezogen auf Gesamtfeststoff einschließlich TDI-Rückstand, des gegebenenfalls chemisch modifizierten TDI-Rückstands mit einer mittleren Teilchengröße von 0,005 bis 2 mm, vorzugsweise 0,03 bis 0,8 mm, besonders bevorzugt 0,05 bis 0,5 mm, (wobei die maximale Teilchengröße bevorzugt unter 1 mm liegt), ein, so erhält man ein im Volumen stark reduziertes Sediment, welches beispielsweise bei etwa gleichen Mengenanteilen Belebtschlamm und TDI-Rückstand eine etwa doppelt so hohe Feststoffkonzentration wie ohne TDI-Rückstand aufweist. Anders ausgedrückt wird auf diese Weise, trotz Verdoppelung des Feststoffgehaltes durch die Zugabe von zerkleinerter TDI-Rückstandsschlacke, das Gesamtschlammvolumen auf etwa die Hälfte verringert.

Da die TDI-Rückstände (auch wenn sie noch freie NCO-Gruppen enthalten) überraschenderweise bei den in der Praxis in Kläranlagen üblichen Verfahrenstemperaturen (ca. 10 bis 35 °C) in den oben angegebenen Einsatzmengen praktisch keinerlei Einfluß auf die Biomassen ausüben, d.h. biologisch inert (indifferent) sind, ist es erfindungsgemäß sogar möglich, die zerkleinerten TDI-Rückstände bereits in die Belebungsbecken einzutragen und gemeinsam mit der Biomasse in die Klärbecken überlaufen zu lassen, wo dann die wesentlich verbesserte Sedimentation erfolgt.

Die beschleunigte Sedimentation in den Klärbecken ermöglicht eine höhere Durchsatzleistung an Abwasser. Bei bereits ausgelasteten Kläranlagen wird auf diese Weise zusätzliche Klärkapazität geschaffen, was in vielen Fällen den Bau weiterer Klärbecken überflüssig macht. Beim Neubau von Kläranlagen ermöglicht die vorliegende Erfindung eine erheblich verringerte Dimensionierung.

Zur Ermittlung der für den jeweiligen Abwassertyp optimalen Korngröße und Korngrößenverteilung des gegebenenfalls mit Wasser und/oder durch andere chemische Reaktionen denaturierten oder modifizierten Rückstandes, sowie zwecks Einstellung des günstigsten Gewichtsverhältnisses zwischen TDI-Rückstand und Belebtschlamm-Trockenmasse ist es zweckmäßig (nach einer Vorauswahl durch Laborsedimentationsversuche im 0,5 bis 1 l-Maßstab), mit Hilfe einer einfach konstruierten, etwa 100 l Klärschlamm aufnehmenden Modellanlage, wie sie im Beispielteil näher erläutert wird, Versuche über einen mehrtägigen Zeitraum mit dem speziellen, in einer Kläranlage anfallenden Schlamm und verschiedenen Korngrößen und gegebenenfalls unterschiedlicher Art der Modifizierung der erfindungsgemäß zu verwendenden TDI-Rückstände durchzuführen, wobei man nach Einstellung eines Gleichgewichts zwischen dem Belebungsgefäß und dem Klärgefäß aus dem Rücklauf einmal täglich 1 l-Proben des Belebtschlammes entnimmt. In einer parallel laufenden gleichartigen Modellanlage wird Belebtschlamm unter den gleichen Bedingungen, aber ohne TDI-Rückstand, untersucht, wobei ebenfalls 1 l Proben des Belebtschlammes aus dem Rücklauf zum direkten Vergleich des Sedimentationsverhaltens und des Feststoffgehalts entnommen werden. Die Schlammvolumina der Proben werden z.B. jeweils nach 30 Minuten Standzeit gemessen und können bei gleichem Gehalt an Biomasse direkt miteinander verglichen werden. Auf diese Weise kann man bereits innerhalb des ersten Versuchstages den volumvermindernden Einfluß des erfindungsgemäß zugesetzten jeweiligen TDI-Rückstands auf das Schlammsediment recht genau abschätzen. In der Versuchsanlage lassen sich auch in einfacher Weise der Gehalt an unlöslichen Stoffen im Ablaufwasser, die CSB- und TOC-Werte und schließlich die Vermehrungsrate der Biomasse etwa 1 Woche lang erfassen. Diese Ergebnisse sind hinsichtlich der zu treffenden Auswahl der erfindungsgemäß einzusetzenden TDI-Rückstände für Großversuche in 5 000 bis 10 000 m³ fassenden Belebungs- und Klärbecken voll ausreichend.

## 2) Entwässerung des Klärschlamms

Die für die Optimierung dieser zweiten Verfahrensstufe erforderlichen Mengen an Belebtschlamm/TDI-Rückstand-Sediment können ebenfalls aus der oben erwähnten und im Beispielteil näher beschriebenen Pilotanlage gewonnen werden. Durch Vorversuche wird ermittelt, welcher Anteil der üblicherweise für die Entwässerung auf gängigen Entwässerungsanlagen, z.B. Siebbandpressen, Vakuumdrehfiltern, Kammerfilterpressen oder in Zentrifugen, wie Dekanterzentrifugen, als Flockungshilfsmittel erforderlichen löslichen Polyelektrolyte eingespart werden kann.

Überraschenderweise wurde gefunden, daß mit kationischen Gruppen modifizierte TDI-Rückstände trotz ihrer Unlöslichkeit in Wasser so wirksame Entwässerungshilfsmittel sind, daß (insbesondere bei der Wasserabtrennung mit Hilfe von Zentrifugen und/oder Dekantern) bei vergleichbarer Durchsatzleistung auf die üblicherweise verwendeten, wasserlöslichen Polyelektrolyte, die beträchtliche Kosten verursachen, ganz verzichtet werden kann.

## 3) Entsorgung des Klärschlamms

Die erfindungsgemäß einzusetzenden TDI-Rückstände bieten auch bei der dritten Verfahrensstufe, der Entsorgung, Vorteile.

Die Verbrennung der Klärschlämme erfolgt in der Praxis beispielsweise in Wirbelschichtöfen, in deren Wirbelbett sich Quarzsand befindet. Der filtrierte Klärschlamm wird meistens in Form eines 10 bis 15 %igen Filterkuchens in den Verbrennungsraum eingetragen. Gleichzeitig muß als Energieträger in beträchtlichen Mengen Heizöl oder Stein- bzw. Braunkohle zur Verdampfung des Wassers mit eingespeist werden. Die erfindungsgemäße Verwendung der TDI-Rückstände in einer oder beiden der oben diskutierten Verfahrensstufen (Sedimentation und Aufkonzentrierung) bewirkt nicht nur, daß der Wassergehalt der Belebtschlamm-TDI-Rückstand-Konzentrates, bezogen auf Biomasse, bedeutend geringer ist, sondern auch daß die zusätzlichen Energieträger eingespart werden können. Dadurch wird die Kapazität des Wirbelschichtofens, die wesentlich bei gegebener Rostfläche vom Wassergehalt des zu verbrennenden Materials bestimmt wird, erhöht und die sonst erforderliche Verbrennung wertvoller Energieträger unnötig.

In der Praxis gewinnt neben der Verbrennung der noch relativ viel Wasser enthaltenden Klärschlämme zunehmend deren weitgehende Entwässerung an Bedeutung, wobei nur noch etwa 3 bis 7 Gew.-% Wasser enthaltende Klärschlammpulver erhalten werden. Diese Biomassenpulver sind nur partiell denaturiert, was sich darin zeigt, daß sie durch Einrühren von Wasser schon bei Raumtemperatur revitalisiert werden. Diese Pulver können selbstverständlich ebenfalls verbrannt werden ; eine andere Möglichkeit besteht darin, sie in Deponien abzulagern. Eine großtechnisch interessante und ökologisch unbedenkliche Verwendung dieser Pulver konnte bisher jedoch schon wegen des unerträglichen Geruchs der getrockneten Klärschlämme nicht gefunden werden.

Die beim erfindungsgemäßen Verfahren anfallenden, bereits relativ hochkonzentrierten Schlämme erleichtern naturgemäß die Trocknung. Darüber hinaus treten bei den in der Praxis angewandten Trocknungstemperaturen bis etwa 130 °C Polyadditionsreaktionen zwischen den reaktiven Gruppen des TDI-Rückstands (NCO-Gruppen, aber auch Carbodiimid-, Uretdion- und Uretonimin-Gruppen) und den funktionellen Gruppen der Klärschlamm-Biomassen (beispielsweise deren Aminogruppen) auf, wobei unter Knüpfung von Hauptvalenzbindungen zwischen den Makromolekülen der TDI-Rückstände und der Klärschlammbiomasse unter weitgehender Veränderung der Biomassenstruktur gegebenenfalls sogar deren vollständige Denaturierung erreicht werden kann. Diese Denaturierungsverfahren und die dabei erhaltenen, weitgehend geruchsfreien oder sogar geruchlosen, pulverförmigen neuartigen Verfahrensprodukte werden in einer Parallelanmeldung gesondert beansprucht. Die erwähnten Denaturierungsreaktionen können besonders wirksam unterstützt werden, wenn man bei der Entwässerung der aus Biomasse und TDI-Rückstand bestehenden Schlämme Carbonylverbindungen (insbesondere Formaldehyd) und gegebenenfalls zur Aminoplastbildung befähigte Verbindungen (z.B. Harnstoff oder substituierte Harnstoffe) zusetzt, wie es in der europäischen Patentanmeldung 79 103 832.6 näher beschrieben wird. Die so erhaltenen, biologisch völlig inaktiven, denaturierten Pulver können beispielsweise in der Landwirtschaft als Bodenverbesserungsmittel mit Langzeitdüngerwirkung oder als reaktive Füllstoffe bei der Herstellung von homogenen oder zelligen Kunststoffen verwendet werden.

Mit großem Vorteil kann das erfindungsgemäße Verfahren speziell auch für die Reinigung von Abwässern herangezogen werden, wie sie bei der großtechnischen Produktion von Kohlenmonoxid anfallen. Diese Abwässer, welche bisher ebenfalls in Kläranlagen geleitet wurden, enthalten sehr geringe Mengen (ca. 100 bis 200 ppm) an Flugasche (beispielsweise Metalloxide) als anorganische Schwebstoffe mit einer Teilchengröße von weniger als 1 μ bis ca. 20 μ. Diese bei der großtechnischen CO-Produktion anfallenden Waschwässer werfen bisher ebenfalls erhebliche Probleme auf, da sie in Klärbecken nicht hinreichend rasch durch Sedimentation konzentriert oder wirksam filtriert werden können.

Setzt man jedoch diesen Waschwässern (dies kann gegebenenfalls auch schon innerbetrieblich erfolgen) die auf eine Teilchengröße von unter 1 mm, bevorzugt unter 0,5 mm, zerkleinerten, gegebenenfalls denaturierten TDI-Rückstände in einer Menge von ca. 20 bis 100 Gew.-%, bezogen auf den Anteil anorganischer Schwebstoffe, zu, so erreicht man eine etwa um den Faktor 3 bis 10 Schnellere und außerdem praktisch quantitative Sedimentation der extrem feinteiligen anorganischen Verunreinigungen. Vorzugsweise setzt man bei dieser Variante des erfindungsgemäßen Verfahrens dem Abwasser außerdem noch 2 bis 10 ppm, bevorzugt ca. 5 ppm, an in Wasser gelösten Phosphationen (in Form von Phosphorsäure oder bevorzugt von Phosphaten) zu, wodurch der Sedimentationsprozeß noch weiter synergistisch (bis auf das etwa 30-fache) beschleunigt wird. Die nach der Sedimentation der Schwebstoffe überstehende, völlig klare wäßrige Phase bewirkt beim Vermischen mit neuem trübem Abwasser keine nochmalige Flockung, so daß es möglich ist, den größten Teil des nach der sehr raschen Sedimentation der Verunreinigungen zurückgewonnenen, geklärten Wassers in einem Kreisprozeß direkt wieder der Kohlenmonoxidwäsche zuzuführen. Durch eine einfache, kontinuierlich oder diskontinuierlich ausgestaltete Filtration des Sedimentationsrückstands erhält man ein etwa 30 bis 50 %iges Schlammkonzentrat, welches — in analoger Weise wie die TDI-Rückstände selbst — in Kläranlagen zur verbesserten Entwässerung von Klärschlämmen eingesetzt werden kann.

Die folgenden Beispiele dienen der Erläuterung des erfindungsgemäßen Verfahrens. Wenn nicht anders vermerkt, sind Mengenangaben als Gewichtsteile bzw. Gewichtsprozente zu verstehen.

## A. Sedimentation, Filtration und Verbrennung von Klärschlämmen

Die TDI-Rückstände I und II wurden aus dem zwangsweise bei der Produktion von monomeren Toluylendiisocyanaten anfallenden monomerenfreien Destillationsrückstand durch Einrühren der 150 bis 200 °C heißen teerartigen Schmelze (Sumpfphase der Destillation) in Wasser unter « Denaturierung », anschließende Vorzerkleinerung in Gegenwart von 4 bis 8 % Feuchtigkeit mit Hilfe einer Hammermühle und Feinmahlung in einer Luftstrommühle erhalten. TDI-Rückstand II wurde nach dem Mahlen 6 Stunden bei 130 °C in Anwesenheit von Feuchtigkeit in einem Umluftschrank getempert.

| Charakteristik | TDI-Rückstand | |
|---|---|---|
| | I | II |
| Teilchengröße | | |
| μm | < 600 | 100-315 |
| Isocyanatgehalt in Gew.-% | 4 | 0 |
| Löslichkeit in Wasser | Keine | keine |
| Geruch | frei | frei |

Der Isocyanatgehalt wurde an einer < 60 μm gemahlenen Probe bei 50 °C in Aceton durch Titration bestimmt.

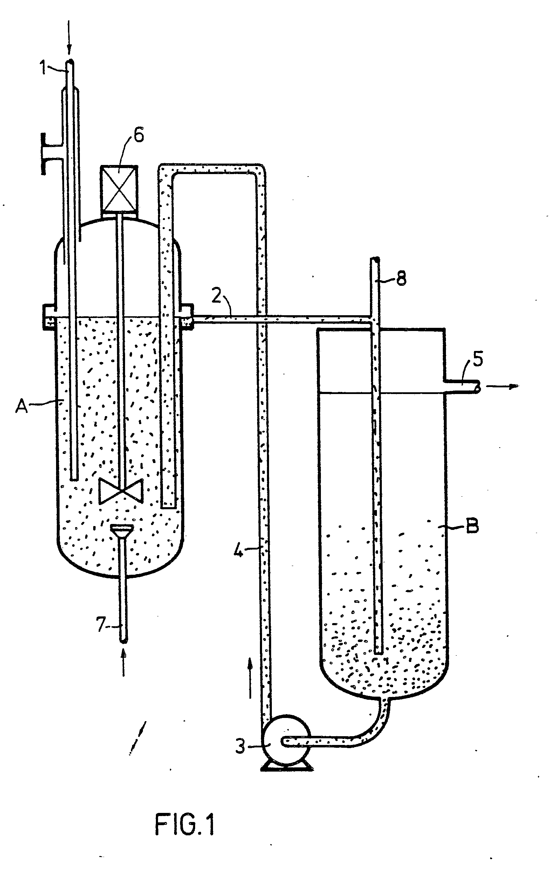

Fig. 1 zeigt schematisch eine Modellanlage, in welcher die Klärschlammsedimentation mit TDI-Rückstandspulvern untersucht werden kann.

Über den Zulauf (1) wird das zu reinigende Abwasser in das Belebungsgefäß (A) (Füllinhalt : 42 l) geleitet, aus dem es über den Überlauf (2) in das Klärgefäß (B) (Füllinhalt : 48 l) geleitet wird. Ein Teil des sedimentierten Klärschlammes wird aus (B) mittels einer Pumpe (3) über einen Rücklauf (4) wieder nach (A) zurückgeführt. Das geklärte Abwasser verläßt das Klärgefäß (B) über den Ablauf (5).

Mittels eines Rührwerks (6) wird das Abwasser in (A) gut durchmischt (ca. 600 bis 900 U/min) und gleichzeitig über die Zuleitung (7) mit Luftsauerstoff versorgt. Bei (8) kann der Überlauf entlüftet werden.

## Patentbeispiele 1 und 2 mit Vergleichsversuchen

Die Vergleichs (Null) versuche werden jeweils in einer Parallelanlage mit den gleichen wie bei den Patentbeispielen eingesetzten Klärschlämmen aus dem laufenden Betrieb einer vollbiologisch arbeitenden Kläranlage, jedoch ohne Zusatz von TDI-Rückständen durchgeführt.

a) Sedimentation

Allgemeine Arbeitsweise (vgl. Fig. 1) :

In das Belebungsgefäß A wird eine Klärschlammprobe von insgesamt 90 l eingefüllt, die ent-

sprechend dem Überlauf auch das Klärgefäß B füllt. Für die erfindungsgemäße Versuchsdurchführung wird der TDI-Rückstand I oder II entweder als trockenes Pulver oder als wäßrige Suspension zugegeben, was bei den gleichzeitig zu betreibenden Vergleichsversuchen unterbleibt.

Der Zulauf des zu reinigenden Biowassers, der Ablauf des vollbiologisch gereinigten Wassers, sowie das Volumen des Rücklaufschlammes werden auf einen Durchsatz von 7 l pro Stunde eingestellt, so daß die mittlere Verweilzeit im Belebungsgefäß ca. 6 Stunden beträgt. Durch Einleiten von Luft werden 0,5 bis 1 mg/l Sauerstoff in Lösung gehalten. Ein Rührer über der Sauerstoff-Fritte sorgt für eine gleichmäßige Durchmischung.

Die Versuchsdauer beträgt jeweils 1 Woche bei Raumtemperatur. Einmal täglich werden dem Rücklauf 1 l Schlammproben entnommen und jeweils mit dem gleichen Volumen Wasser verdünnt. Das Volumen des sedimentierten Schlammes pro l in den einzelnen Proben wird nach 30 Minuten Standzeit gemessen.

Die ermittelten Werte sind der nachstehenden Tabelle zu entnehmen.

Von der unverdünnten Belebtschlammprobe werden der Prozentgehalt Trockensubstanz und der Glühverlust (GV) gemessen. Außerdem wird die Reinheit des Ablaufs durch Bestimmung der CSB- und TOC-Werte und die Menge an ungelösten Stoffen (Schwebstoffe) verglichen.

Die nachstehenden Meßergebnisse sind die Durchschnittswerte von an 7 aufeinanderfolgenden Tagen um die gleiche Zeit gezogenen Proben:

| | Nullversuche ohne TDI-Rückstand | Beispiel 1 mit TDI-R. I | Beispiel 2 mit TDI-R. II |
|---|---|---|---|
| Schlammvolumen (ml) im Belebtschlamm nach 30 Min. | 680 750 | 260 | 310 |
| Trockensubstanz des Belebtschlamms (%) | 1,00 1,08 | 1,95 | 1,61 |
| Glühverlust (Gew.-%) | 77,9 74,0 | 87,3 | 86,2 |
| CSB (mg/l Ablauf) | 990 1 160 | 1 160 | 980 |
| TOC (mg/l Ablauf) | 237 137 | 137 | 235 |
| restliche Schwebstoffe im Ablauf (mg/l) | 125 135 | 95 | 75 |

Feststoffverhältnis zwischen Belebtschlamm und TDI-Rückstand I bzw. II:

Beispiel 1 : 1 : 1
Beispiel 2 : 2 : 1
CSB   Chemischer Sauerstoffbedarf
TOC   Totaler organischer Kohlenstoff
(bestimmt gemäß Deutschem Einheitsverfahren zur Wasseruntersuchung ; Vorschrift H 4).

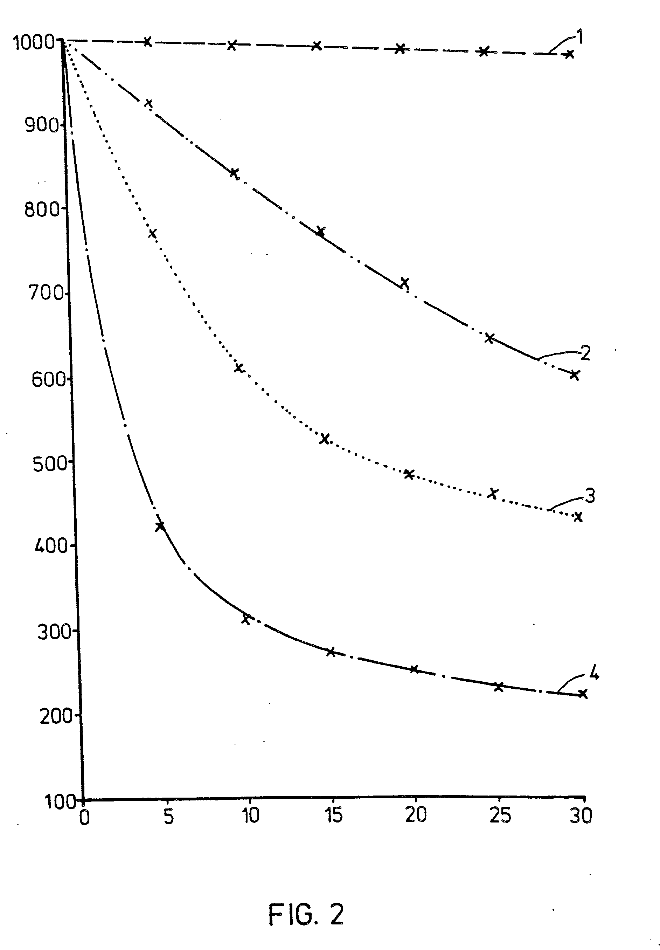

In Fig. 2 ist das Sedimentationsverhalten des Belebtschlamms aus Beispiel 2 (Zusatz von TDI-Rückstand II) bzw. aus dem entsprechenden Nullversuch dargestellt. Die Meßwerte geben wieder das Mittel aus den 1 Woche lang einmal täglich gezogenen Proben an. Als Abszisse ist die Absetzzeit in Minuten, als Ordinate das Volumen der sedimentierten Phase in ml angegeben (das Gesamtvolumen der untersuchten Probe beträgt jeweils 1 l).

Kurve (1) stellt den Nullversuch (ohne TDI-Rückstand) dar ; für Kurve (2) wurde die Nullversuchsprobe 1 : 1 mit Wasser verdünnt. Kurve (3) repräsentiert die gemäß Beispiel 2 gezogenen Belebtschlamm-Proben, für Kurve (4) wurden diese Schlammproben wieder 1 : 1 mit Wasser verdünnt.

Der Vergleich der Kurven (1) und (3) bzw. (2) und (4) zeigt die erfindungsgemäß erzielte erhebliche Verbesserung des Sedimentationsverhaltens.

b) Filtration

Die Filtrationsversuche wurden mit einer Technikums-Siebbandpresse (Bandbreite : 20 cm ; Bandlänge Oberseite : 80 cm ; Maschenweite : 224 × 464 µm) ausgeführt.

In einem Rührgefäß werden die sedimentierten Belebtschlammversuchsproben mit einer so großen Menge einer frisch zubereiteten Lösung eines handelsüblichen kationischen Polyelektrolyten auf Polyamidbasis versetzt, daß eine sofortige Flockung des Klärschlammes erfolgt und am Ende des Bandes der Filterkuchen leicht und quantitativ abfällt (Die Zahlenwerte der Folgenden Tabelle repräsentieren das Mittel aus 10 Versuchen).

| | Nullversuch zu Beispiel 1 bzw. 2 | Beispiel 1 | Beispiel 2 |
|---|---|---|---|
| Menge Polyelektrolyt (Nullversuche = 100 %) | 100 100 | 58 | 66 |
| Trockensubstanz des Filterkuchens (Gew.-%) | 12,5 12,8 | 32,2 | 28,4 |
| Restschwebstoffgehalt im Filtrat (ml/l) | 20 24 | < 1 | 3 |

c) Verbrennung der erfindungsgemäß gewonnenen Schlämme

Für die Verbrennung des Filterkuchens im Wirbelschichtofen ist im Vergleich zu den Nullversuchen bei Patentbeispiel 1 eine um 26 % reduzierte Rostfläche, berechnet auf klärschlamm, erforderlich, bei Patentbeispiel 2 beträgt die Reduktion 43 %. Anders ausgedrückt kann bei gegebener Rostfläche der Durchsatz an Klärschlamm bei Patentbeispiel 1 um das 1,30-fache, bei Beispiel 2 um das 1,75-fache, jeweils bezogen auf die Nullversuche, gesteigert werden.

Zusätzlich werden pro Kilogramm mitverbranntem TDI-Rückstand ca. 25 000 kJ an Heizöl oder Kohle eingespart.

### B. Zentrifugieren, Nachbehandeln und Trocknen von Klärschlämmen

Die in den Patentbeispielen 3 bis 5 eingesetzten TDI-Rückstände III bis V, sind wie die Rückstände I und II durch Einrühren des zwangsweise bei der Produktion von Toluylendiisocyanaten anfallenden teerartigen, NCO-haltigen Sumpfprodukts in die 3- bis 4-fache Menge Wasser als grobe Schlacke mit inkludiertem Restisocyanatgehalt von 4 bis 8 % erhalten werden. Nach dem Ablaufen des Wassers wurde die Schlacke, die noch 6 bis 10 % Wasser enthielt, in einer Hammermühle auf < 1 mm vorzerkleinert, danach 30 bis 45 %ig in Wasser, dem die NCO-äquivalente Menge Ammoniak zugefügt wurde, suspendiert und in einer Rührwerkskugelmühle < 160 μm für Patentbeispiel 3 bzw. in einer Zahnkolloidmühle < 500 μm für Patentbeispiel 4 gemahlen.

Der kationische TDI-Rückstand V wurde analog DE-OS 28 46 815 in folgender Weise hergestellt:

### Rezeptur

121,8 Teile eines mit Wasser vollständig denaturierten, Polyharnstoffgruppen enthaltenden aber von Isocyanatgruppen freien TDI-Rückstandes, der in 40 % wäßriger Suspension in einer Zahnkolloidmühle zerkleinert und durch Abnutschen auf 77 % konzentriert wurde (Teilchengröße < 500 μm);

17,1 Teile 3-Amino-1-dimethylaminopropan;

18,4 Teile einer 37 %igen wäßrigen Formaldehydlösung;

77,5 Teile Wasser;

32,7 Teile 85 %ige Phosphorsäure, mit

39,1 Teilen Wasser verdünnt.

### Reaktionsbedingungen

Der zerkleinerte TDI-Rückstand wird in einem Rührkessel in Wasser suspendiert und die Amin-Formaldehydmischung bei Raumtemperatur rasch zudosiert, wobei gelinde Erwärmung eintritt. Die Innentemperatur wird durch Erwärmen auf 70 °C gebracht und die Hälfte der verdünnten Phosphorsäure zugegeben. Nach Steigerung der Temperatur auf 80 bis 90 °C wird die Restmenge Phosphorsäure eingeleitet, wobei sich ein pH-Wert von ca. 2,8 einstellt.

Die Temperatur wird weitere 90 Minuten gehalten, dann der Kesselinhalt abgekühlt und in eine Drucknutsche eingeleitet.

Der Nutschkuchen wird einmal gewaschen und 71 %ig als Klärschlamm-Flockungshilfe isoliert.

0 019 216

Patentbeispiele 3 bis 5 und Vergleichsversuche

a) Entwässerung

Schlämme einer vollbiologisch arbeitenden Kläranlage werden mit Hilfe von TDI-Rückständen in einer Dekanterzentrifuge mit einem stationären Durchlaufvolumen von ca. 8 l aufkonzentriert. Bei den nachfolgenden Patentbeispielen beträgt das Feststoffverhältnis zwischen Belebtschlamm und TDI-Rückstand jeweils 18 : 15. Verwendet wurde ein frisch aus einer Kläranlage entnommener Schlamm mit einer Feststoffkonzentration von 1,7 %. Wenn angegeben, wurde ein kationisches Polyamid als praxisübliches Flockungsmittel zugegeben, wobei 100 % jener Menge entspricht, die beim Nullversuch (ohne TDI-Rückstände) gebraucht wurde. Der Gehalt an Restschwebstoffen in der wäßrigen Phase einer 5 l Probe wurde nach 3 Minuten Standzeit gemessen.

| Beispiel | Durchsatz (l/Stunde) | Flockungs- mittel (+) (%) | TDI- Rückstand | mittlere Verweil- zeit im Separator (Sekunden) | « Überstand » (Restsedi- ment) (Vol.-%) | Feststoff- gehalt des Schlamm- konzentra- tes (Gew.-%) |
|---|---|---|---|---|---|---|
| 3 | 1 300 | — | III | 1,4 | 1,6 | 18,4 |
| 4 | 1 500 | — | IV | 0,7 | 1,2 | 25,2 |
| 4a | 1 900 | 35 | IV | 0,7 | 0,6 | 24,5 |
| 5 | 2 400 | — | V | 0,7 | 0,3 | 27,6 |
| Nullversuche | 250 | — | — | 2,7 | 22,5 | 7,8 |
| | 1 600 | 100 | — | 1,4 | 3,2 | 9,2 |

(+) Konventionelles, kationisches, wasserlösliches Polyamid

b) Trocknung der Schlammkonzentrate

Die Entfernung des Restwassers kann, wie in der Praxis üblich, in kontinuierlich arbeitenden Trocknungsanlagen erfolgen, wobei das zu trocknende Gut Temperaturen bis zu etwa 130 °C (insgesamt ca. 15 bis 40 Minuten lang) ausgesetzt wird. Den in den Patentbeispielen 3 bis 5 charakterisierten Klärschlamm-TDI-Rückstandsgemischen können dabei gegebenenfalls noch Formaldehyd und evtl. zusätzlich Harnstoff zugegeben werden, falls das Endprodukt als Stickstoffdünger in der Landwirtschaft verwendet werden soll.

Die Beispiele zeigen, wie schon in einer einfachen, diskontinuierlichen Vergleichsanordnung, eine schnelle Trocknung unter weitgehender chemischer Modifizierung der Verfahrensprodukte möglich ist.

Allgemeine Arbeitsweise

Die erfindungsgemäß nach den Patentbeispielen 3 bis 5 erhaltenen Schlammkonzentrate, die aus Belebtschlamm und den gekennzeichneten TDI-Rückständen bestehen, werden in einer Rührkesselapparatur mit den in der nachfolgenden Tabelle angegebenen Zusätzen 2 bis 4 Stunden bei pH 3 bis 5 (mit Phosphorsäure) gekocht, auf einer Drucknutsche filtriert und zweimal mit Wasser gewaschen. Der Feststoffgehalt des Nutschkuchens beträgt über 50 Gew.-%.

Nachbehandlung der Konzentrate aus Klärschlamm und TDI-Rückstand (die Mengen an Harnstoff bzw. Formaldehyd sind als Gew.-%, bezogen auf Gesamtfeststoff, zu verstehen) :

| Schlammkonzentrat | | Formaldehyd | Harnstoff | Feststoffgehalt des Nutschkuchens (Gew.-%) |
|---|---|---|---|---|
| Beispiel Nr. | Feststoff (Gew.-%) | | | |
| 3 | 18,4 | 2,4 | — | 51 |
| 3 | 18,4 | 15,0 | 10,0 | 58 |
| 4 | 26,2 | 2,0 | 1,0 | 53 |

Die Vergleichsproben von Klärschlämmen, die ohne TDI-Rückstand in der Dekanterzentrifuge aufkonzentriert wurden, lassen sich, unter sonst gleichen Bedingungen behandelt, wenn überhaupt nur äußerst langwierig mit einem wesentlich niedrigeren Feststoffgehalt abnutschen.

In einem Umlufttrockenschrank wird das feuchte Material auf Blechen bis zu einem Restwassergehalt von 20 Gew.-%, bevorzugt unter 5 Gew.-%, getrocknet. Das geruchsarme Endprodukt kann als Langzeitdünger und Bodenverbesserungsmittel eingesetzt werden.

Für die Verwendung als reaktiver Füllstoff zur Modifizierung von Kunststoffen ist eine zusätzliche, 2- bis 3-stündige Temperung bei 130 bis 150 °C von Vorteil, wobei das Restwasser völlig eleminiert und gleichzeitig eine weitere Geruchsverbesserung erreicht wird.

## Ansprüche

1. Verfahren zur verbesserten Abscheidung von organischen und/oder anorganischen wäßrigen Schlämme bei der Reinigung von Abwässern in mechanischen und/oder biologischen Kläranlagen durch Zusatz von die Schlammabscheidung beschleunigenden Mitteln, dadurch gekennzeichnet, daß man als Abscheidungsmittel pulverförmige, in Wasser und organischen Lösungsmitteln unlösliche Destillationsrückstände, zu einer mittleren Teilchengröße von weniger als 2 mm vermahlen, einsetzt, wie sie nach der destillativen Entfernung von monomeren Toluylendiisocyanaten aus dem rohen technischen Phosgenierungsprodukt von Toluylendiaminen als Schlacke anfallen und die gegebenenfalls durch Reaktion mit gegenüber ihren funktionellen Gruppen reaktiven Verbindungen chemisch modifiziert wurden.

2. Verfahren nach Anspruch 1, dadurch gekennzeichnet, daß man pulverisierte Destillationsrückstände mit einer maximalen Teilchengröße von 1 mm einsetzt.

3. Verfahren nach Ansprüchen 1 und 2, dadurch gekennzeichnet, daß man pulverisierte Destillationsrückstände mit einer mittleren Teilchengröße von 0,03 bis 0,8 mm einsetzt.

4. Verfahren nach Ansprüchen 1 bis 3, dadurch gekennzeichnet, daß man durch Eintragen in Wasser bei über 130 °C denaturierte Destillationsrückstände einsetzt.

5. Verfahren nach Ansprüchen 1 bis 4, dadurch gekennzeichnet, daß man Destillationsrückstände einsetzt, deren NCO-Gruppen durch Umsetzung mit Wasser und/oder anderen gegenüber Isocyanaten reaktiven Verbindungen vollständig abreagiert wurden.

6. Verfahren nach Ansprüchen 1 bis 5, dadurch gekennzeichnet, daß man Destillationsrückstände einsetzt, welche kationische und/oder anionische Gruppen tragen.

7. Verfahren nach Ansprüchen 1 bis 6, dadurch gekennzeichnet, daß man die Destillationsrückstände in einer Menge von 10 bis 80 Gew.-%, bezogen auf Gesamtfeststoff einschließlich Abscheidungshilfsmittel, zusetzt.

8. Verfahren nach Ansprüchen 2 bis 7, dadurch gekennzeichnet, daß man die Destillationsrückstände schon dem Belebtschlammbecken einer biologischen Kläranlage zusetzt.

## Claims

1. A process for the improved separation of organic and/or inorganic aqueous sludges in the purification of effluents in mechanical and/or biological purification plants by the addition of agents which accelerate separation of the sludges, characterised in that the separating agents used are powderform distillation residues insoluble in water and organic solvents and ground to a mean particle size of less than 2 mm, of the type which accumulate as slag after the removal of monomeric tolylene diisocyanates by distillation from the crude commercial phosgenation product of tolylene diamines and which have optionally been chemically modified by reaction with compounds reactive to their functional groups.

2. A process according to Claim 1, characterised in that powdered distillation residues having a maximum particle size of 1 mm are used.

3. A process according to Claims 1 and 2, characterised in that powdered distillation residues having a mean particle size of from 0.03 to 0.8 mm are used.

4. A process according to Claims 1 to 3, characterised in that distillation residues denatured by introduction into water at a temperature above 130 °C are used.

5. A process according to Claims 1 to 4, characterised in that distillation residues of which the NCO-groups have been completely reacted off by reaction with water and/or other compounds reactive to isocyanates are used.

6. A process according to Claims 1 to 5, characterised in that distillation residues containing cationic and/or anionic groups are used.

7. A process according to Claims 1 to 6, characterised in that the distillation residues are added in a quantity of from 10 to 80 % by weight, based on the total solids including the separation aid.

8. A process according to Claims 2 to 7, characterised in that the distillation residues are added to the actual activated sludge tank of a biological purification plant.

## Revendications

1. Procédé pour améliorer la séparation des boues aqueuses organiques et/ou minérales à l'épuration des eaux usées dans des installations de clarification mécaniques et/ou biologiques par addition de produits accélérant la séparation des boues, caractérisé en ce que l'on utilise en tant qu'agents de séparation des résidus de distillation pulvérulents insolubles dans l'eau et les solvants organiques, broyés à une dimension moyenne de particules inférieure à 2 mm, tels qu'on les obtient à l'état de crasses après élimination par distillation des diisocyanato-toluènes monomères du produit de phosgénation industriel brut des toluylène-diamines, et qu'on a éventuellement modifiés chimiquement par réaction avec des composés réactifs à l'égard de leurs groupes fonctionnels.

2. Procédé selon la revendication 1, caractérisé en ce que l'on utilise des résidus de distillation broyés à une dimension maximale de particules de 1 mm.

3. Procédé selon les revendications 1 et 2, caractérisé en ce que l'on utilise les résidus de distillation broyés à une dimension moyenne de particules de 0,03 à 0,8 mm.

4. Procédé selon les revendications 1 à 3, caractérisé en ce que l'on utilise des résidus de distillation dénaturés par introduction dans l'eau à une température supérieure à 130 °C.

5. Procédé selon les revendications 1 à 4, caractérisé en ce que l'on utilise des résidus de distillation dont les groupes NCO ont été entièrement convertis par réaction avec l'eau et/ou d'autres composés réactifs avec les isocyanates.

6. Procédé selon les revendications 1 à 5, caractérisé en ce que l'on utilise des résidus de distillation portant des groupes cationiques et/ou anioniques.

7. Procédé selon les revendications 1 à 6, caractérisé en ce que l'on ajoute les résidus de distillation en quantités de 10 à 80 % en poids, par rapport aux matières solides totales, y compris le produit auxiliaire de séparation.

8. Procédé selon les revendications 2 à 7, caractérisé en ce que l'on ajoute déjà les résidus de distillation dans le bassin de boues activées d'une installation de clarification biologique.

FIG.1

FIG. 2